# EUROPÄISCHE PATENTSCHRIFT

(11) **EP 1 452 404 B1**
(45) Veröffentlichungstag und Bekanntmachung des Hinweises auf die Patenterteilung: **26.04.2006**
(21) Anmeldenummer: 03028731.2
(22) Anmeldetag: 12.12.2003
(51) Int. Cl.: B60R 21/20

(54) **Gassackmodul für Lenkrad**
Airbag for steering wheel
Airbag pour volant de véhicule

(30) Priorität: 28.02.2003 DE 20303303 U
(43) Veröffentlichungstag der Anmeldung: 01.09.2004
(73) Patentinhaber: TRW Automotive Safety Systems GmbH, 63743 Aschaffenburg (DE)
(72) Erfinder: Kähler, Karsten, 63743 Aschaffenburg (DE); Scherer, Ralf, 63739 Aschaffenburg (DE); Schneider, Michael, Dr., 63834 Sulzbach (DE); Schütz, Dominik, 63857 Waldaschaff (DE)
(74) Vertreter: Kitzhofer, Thomas

(56) Entgegenhaltungen:
- DE-U- 29 621 295
- US-A1- 2002 109 337

## Beschreibung

Die Erfindung betrifft ein Gassackmodul mit einem Gasgenerator und einem Modulgehäuse, wobei der Gasgenerator einen Generatorflansch aufweist.

Fahrergassackmodule gehören seit einigen Jahren zur Serienausstattung moderner Fahrzeuge. Überlegungen zur Wirtschaftlichkeit fordern, das Gassackmodul in möglichst wenigen Arbeitsschritten montieren und am Fahrzeug befestigen zu können. Bei der Befestigung von Gassackmodulen in Lenkrädern wird daher eine Befestigung über Verschraubungen aus Kosten- und Zeitgründen immer mehr durch die Verwendung von Rastverbindungen ersetzt. Diese müssen gleichzeitig schnell und einfach schließbar sein und eine sichere Verbindung gewährleisten.

US 2002/0109337 beschreibt ein Gassackmodul mit einem Gasgenerator und einem Modulgehäuse, wobei der Gasgenerator einen Generatorflansch aufweist, wobei am Generatorträger erste, aus Blech bestehende, hakenförmige Befestigungselemente zur Befestigung des Gassackmoduls an einem Lenkrad und zweite Befestigungselemente zur Befestigung des Gasgenerators am Modulgehäuse ausgebildet sind.

DE 29 621 295 U beschreibt ein Gassackmodul mit einem Gasgenerator und einem Modulgehäuse wobei der Gasgenerator in einem Generatorträger befestigt ist, wobei am Generatorträger erste, aus Blech bestehende, hakenförmige Befestigungselemente zur Befestigung des Gassackmoduls an einem Lenkrad ausgebildet sind.

Aufgabe der Erfindung ist es, ein obengenanntes Gassackmodul bezüglich seiner Montage und Befestigung am Lenkrad zu verbessern. Diese Aufgabe ist mit den Merkmalen des Anspruchs 1 gelöst. Diese Gestaltung erlaubt es, das Gassackmodul über den Gasgenerator am Lenkrad z.B. mittels einer Rastverbindung zu befestigen, während gleichzeitig mit wenig Aufwand der Gasgenerator am Modulgehäuse fixierbar ist. Der Generatorflansch, der gewöhnlich ein den Gasgenerator radial umgebender Blechring ist, ist erfindungsgemäß so ausgebildet, daß auf weitere Bauteile zur Befestigung des Gasgenerators am Modulgehäuse sowie des Moduls am Lenkrad verzichtet werden kann. Die Befestigung des Moduls am Lenkrad über den Gasgenerator hat auch den Vorteil, daß die beim Zünden des Gasgenerators auftretenden hohen Kräfte direkt an lenkradfeste Bauteile übertragen werden können. Durch die Reduktion der Zahl der Bauteile werden Fertigungszeit und Fertigungskosten reduziert.

Bevorzugt sind die ersten und zweiten Befestigungselemente aus Blech ausgestanzt oder ausgeschnitten. Die Herstellung des Generatorflanschs kann so erfolgen, daß einstückig mit dem Blechflansch bereits die ersten und zweiten Befestigungselemente gefertigt werden. Hierzu werden der Generatorflansch sowie die Befestigungselemente aus dem zunächst flachen Blech ausgestanzt oder ausgeschnitten und erst später in ihre endgültige Position und Form gebogen oder umgeformt.

Nach einer anderen bevorzugten Ausführungsform der Erfindung sind die zweiten Befestigungselemente als Blechabschnitte ausgebildet und mit dem Modulgehäuse durch Krimpen verbunden. Hierzu sind die am Generatorflansch ausgebildeten Abschnitte z.B. um den Rand einer Öffnung des Modulgehäuses umgebogen und an diesem durch Krimpen befestigt.

Eine Ausführungsform der Erfindung sieht vor, daß die zweiten Befestigungselemente mit dem Modulgehäuse über wenigstens eine Sicherungsklammer verbunden sind. In diesem Fall können die näher zum Generator gelegenen Abschnitte der ersten Befestigungselemente als zweite Befestigungselemente dienen, an denen die Sicherungsklammer angreift und so den Gasgenerator am Modulgehäuse fixiert. Auch hier können die zweiten Befestigungselemente alternativ als von den ersten Befestigungselementen separate Bauteile ausgebildet sein.

Nach einer weiteren bevorzugten Ausführungsform sind die zweiten Befestigungselemente mit dem Modulgehäuse durch eine Preßpassung verbunden. Hierzu läßt sich z. B. ein den Gasgenerator umfangsmäßig vollständig umgebender Abschnitt des Generatorflansches als zweites Befestigungselement nutzen.

Der Generatorflansch kann noch eine weitere Aufgabe übernehmen, indem ein Einblasmund eines im Modulgehäuse angeordneten Gassacks durch den Generatorflansch am Modulgehäuse befestigt ist, was die Einsparung eines zusätzlichen Gassackhalteelements erlaubt. Der Gassack wird hierbei auf herkömmliche Weise zwischen dem Generatorflansch, der als Gassackhalteelement dient, sowie dem Modulgehäuse geklemmt, wobei im Gassack Öffnungen vorgesehen sein können, die den Einblasmund umgeben, durch die sich die ersten und/oder zweiten Befestigungselemente erstrecken, um den Gassack zusätzlich zu fixieren.

Ein Ziel der Erfindung ist es, über den Generatorflansch das Gassackmodul am Lenkrad oder, allgemein gesprochen, an einem Fahrzeug zu befestigen, während gleichzeitig über den Generatorflansch der Gasgenerator mit dem Modulgehäuse verbunden wird. Das Modulgehäuse kann hierbei als Schale ausgebildet sein, die den Gasgenerator und den Gassack aufnimmt, es kann sich aber auch z.B. um einen plattenförmigen Gasgeneratorträger oder ein anderes Bauteil handeln.

Weitere Merkmale und Vorteile der Erfindung ergeben sich aus der nachfolgenden Beschreibung mehrerer Ausführungsbeispiele in Verbindung mit den beigefügten Zeichnungen. In diesen zeigen:
- Figur 1a eine teilgeschnittene Ansicht eines erfindungsgemäßen Gassackmoduls gemäß einer ersten Ausführungsform;
- Figur 1b eine vergrößerte Ansicht des mit "X" bezeichneten Details des Gassackmoduls aus Figur 1;
- Figur 2 das mit "X" bezeichnete Detail des Gassackmoduls aus Figur 1 gemäß einer zweiten Ausführungsform der Erfindung;
- Figur 3 das mit "X" bezeichnete Detail des Gassackmoduls aus Figur 1 gemäß einer dritten Ausführungsform der Erfindung;
- Figur 4 einen Schnitt durch die Befestigungselemente längs der Linie IV-IV in Figur 3; und
- Figur 5 einen Schnitt durch das Befestigungselement und den Boden des Modulgehäuses gemäß einer weiteren Ausführungsform.

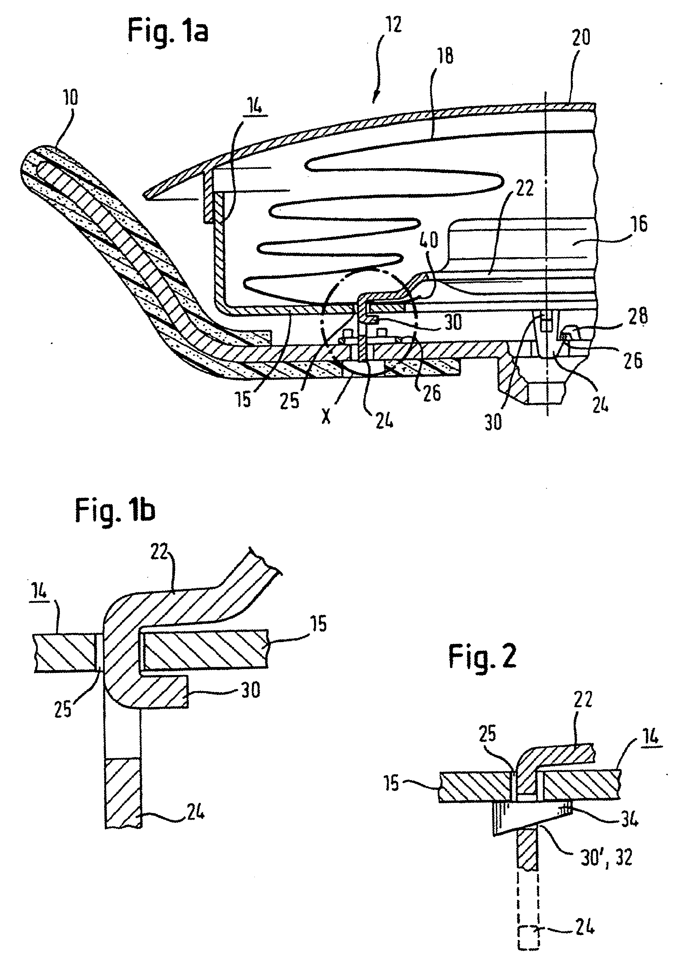

In den Figuren 1a und b ist ein Lenkrad 10 mit einem Gassackmodul 12 gezeigt, wobei das Gassackmodul 12 in dem Nabenbereich des Lenkrads 10 eingesetzt und an diesem fixiert ist.

Das Gassackmodul 12 weist ein topfförmiges Modulgehäuse 14 mit einem Boden 15 auf, einen Gasgenerator 16 sowie einen gefalteten, im Modulgehäuse 14 angeordneten Gassack 18. Das Modulgehäuse 14 ist auf bekannte Weise durch eine Abdeckung 20 verschlossen. Hier ist ein schalenförmiges Modulgehäuse 14 gezeigt, in dem der Gassack 18 aufgenommen ist. Die Erfindung ist jedoch auch ohne weiteres auf andere Formen des Modulgehäuses, wie z. B. flache Generatorträger, übertragbar.

Der Gasgenerator 16 ist im hier gezeigten Fall ein zylindrischer, topfförmiger Gasgenerator, der umfangsmäßig von einem radial abstehenden, aus einem Blech bestehenden Generatorflansch 22 umgeben ist.

Am Generatorflansch 22 sind streifenförmige seitliche Fortsätze axial in Richtung Boden 15 gebogen. Diese haben hakenförmige erste Befestigungselemente 24, die sich durch Öffnungen 25 im Boden 15 des Modulgehäuses 14 erstrecken und in ein fest mit dem Lenkrad verbundenes, aber um ein gewisses Spiel bewegbares Arretierungsmittel 26 eingreifen, um das Gassackmodul 12 am Lenkrad 10 zu fixieren. In der hier dargestellten Ausführungsform ist das Arretierungsmittel 26 von lenkradfest ausgebildeten Haken 28 gehalten. Selbstverständlich sind auch Ausführungsformen denkbar, in denen die hakenförmigen ersten Befestigungselemente 24 direkt in komplementäre Rastelemente am Lenkrad 10 eingreifen. Es sind mehrere dieser ersten Befestigungselemente 24 vorgesehen, die den Gasgenerator 16 umfangsmäßig umgeben, bevorzugt 3 bis 5. Die Haken der ersten Befestigungselemente 24 können entweder in die gleiche oder in verschiedene Richtungen weisen.

In den hier gezeigten Beispielen ist das Gassackmodul 12 als sogenanntes Floating-Horn-Modul ausgebildet.

Der Generatorflansch 22 weist zusätzlich zu den ersten Befestigungselementen 24 mehrere zweite Befestigungselemente 30 auf. In der in Figur la dargestellten Ausführungsform sind diese als aus den Armen der ersten Befestigungselemente 24 freigeschnittene Laschen ausgebildet, die in Richtung zum Gasgenerator 16 hin umgebogen sind und am Rand der Öffnungen 25 den Boden des Modulgehäuses 14 umgreifen. Die zweiten Befestigungselemente 30 sind am Modulgehäuse 14 in diesem Fall durch Krimpen fest befestigt. Die umgebogenen Abschnitte der zweiten Befestigungselemente 30 liegen nach deren Befestigung am Modulgehäuse 14 an der zum Lenkrad 10 gerichteten Seite des Modulgehäuses 14 an.

Es ist auch denkbar, die zweiten Befestigungselemente 30 an einer anderen Stelle des Umfangs des Generatorflansches 22 anzuordnen als die ersten Befestigungselemente 24.

In Figur 2 ist eine weitere Ausführungsform dargestellt. Hier sind die zweiten Befestigungselemente 30' durch Ausnehmungen 32 in den Armen der ersten Befestigungselemente 24 gebildet. Der Gasgenerator 16 wird durch eine Keil-Klemmverbindung mit einem oder mehreren einen keilförmigen Abschnitt aufweisenden Bauteilen 34 am Modulgehäuse 14 befestigt. Wie in Figur 2 angedeutet, ist die Ausnehmung 32 im Arm eines der Befestigungselemente 24 ausgebildet, es ist jedoch auch möglich, die zweiten Befestigungselemente 30' an einer räumlich von der ersten Befestigungselementen 24 getrennten Stelle vorzusehen.

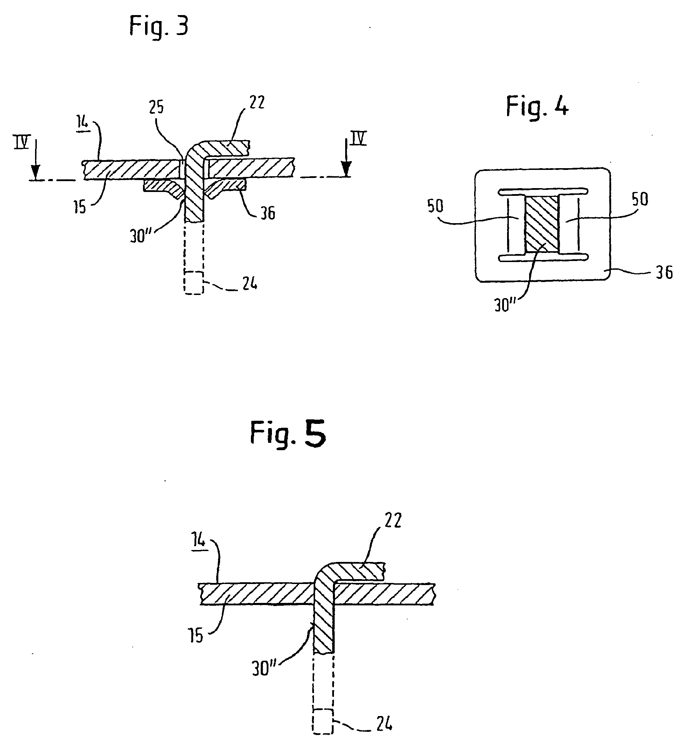

Bei der in den Figuren 3 und 4 gezeigten Ausführungsform sind die zweiten Befestigungselemente 30" durch obere Abschnitte der ersten Befestigungselemente 24 gebildet. Diese werden auf der Unterseite des Modulgehäuses 14 durch eine oder mehrere entsprechend geformte, gestanzte Sicherungsklammern 36 fixiert, die eine Bewegung des Gasgenerators vom Lenkrad 10 weg verhindern. Die Sicherungsklammer hat zwei umgeformte, scharfkantige Laschen 50, deren Ränder gegen die Seitenflächen des Befestigungselements 30" drücken.

Der Generatorflansch 22 dient auch gleichzeitig als Gassackhalteelement. Der Rand 40 eines Einblasmunds des Gassacks 18 ist zwischen dem Generatorflansch 22 und dem Boden des Modulgehäuses 14 geklemmt. Der Gassack 18 kann z.B. mit den Öffnungen 25 des Modulgehäuses 14 korrespondierende Öffnungen aufweisen, durch die die ersten und/oder zweiten Befestigungselemente 24, 30 hindurchgreifen. Auch die in den Figuren 2 und 3 gezeigten Ausführungsformen können einen derart ausgebildeten Generatorflansch 22 aufweisen.

In der in Figur 5 gezeigten Ausführungsform der Erfindung ist das zweite Befestigungselement 30" als ein Abschnitt des Generatorflansches ausgebildet, der mit dem Boden 15 des Modulgehäuses 14, bevorzugt mit einem Rand einer Öffnung, in die der Gasgenerator eingesetzt ist, über eine Preßpassung verbunden ist.

In einer anderen möglichen Ausführungsform der Erfindung sind die ersten bzw. zweiten Befestigungselemente nicht einstückig mit dem Generatorflansch verbunden, sondern als separate Bauteile ausgebildet und durch Kleben oder Schweißen fest mit dem Generatorflansch verbunden. Der Generatorflansch wiederum kann einstückig mit dem Gasgenerator ausgebildet oder ein separates, fest mit diesem verbundenes Bauteil sein.

## Patentansprüche

1. Gassackmodul mit einem Gasgenerator (16) und einem Modulgehäuse (14),
wobei der Gasgenerator (16) einen Generatorflansch (22) aufweist, an dem erste, aus Blech bestehende, hakenförmige Befestigungselemente (24) zur Befestigung des Gassackmoduls (12) an einem Lenkrad (10)
und zweite Befestigungselemente (30; 30'; 30") zur Befestigung des Gasgenerators (16) am Modulgehäuse (14) ausgebildet sind, wobei die zweiten Befestigungselemente (30; 30'; 30") an den ersten Befestigungselementen (24) ausgebildet sind.

2. Gassackmodul nach Anspruch 1, **dadurch gekennzeichnet, daß** die ersten und zweiten Befestigungselemente (24; 30; 30'; 30") aus Blech ausgestanzt oder ausgeschnitten sind.

3. Gassackmodul nach Anspruch 1, **dadurch gekennzeichnet, daß** die zweiten Befestigungselemente (30') jeweils durch eine Aussparung (32) in den ersten Befestigungselementen (24) gebildet sind.

4. Gassackmodul nach einem der vorhergehenden Ansprüche, **dadurch gekennzeichnet, daß** die zweiten Befestigungselemente (30') mit dem Modulgehäuse (14) durch eine Keil-Klemmverbindung (32, 34) verbunden sind.

5. Gassackmodul nach einem der Ansprüche 1 bis 2, **dadurch gekennzeichnet, daß** die zweiten Befestigungselemente (30) als Blechabschnitte ausgebildet und mit dem Modulgehäuse (14) durch Krimpen verbunden sind.

6. Gassackmodul nach einem der Ansprüche 1 bis 2, **dadurch gekennzeichnet, daß** die zweiten Befestigungselemente (30") mit dem Modulgehäuse (14) über wenigstens eine Sicherungsklammer (36) verbunden sind.

7. Gassackmodul nach einem der Ansprüche 1 bis 2, **dadurch gekennzeichnet, daß** die zweiten Befestigungselemente mit dem Modulgehäuse durch eine Preßpassung verbunden sind.

8. Gassackmodul nach einem der vorhergehenden Ansprüche **dadurch gekennzeichnet, daß** ein Einblasmund eines im Modulgehäuse (14) angeordneten Gassacks (18) durch den Generatorflansch (22) am Modulgehäuse (14) befestigt ist.

9. Gassackmodul nach einem der vorhergehenden Ansprüche, **dadurch gekennzeichnet, daß** die Befestigungselemente (24, 30, 30', 30") an axial in Richtung Boden (15) des Modulgehäuses umgebogenen streifenförmigen seitlichen Fortsätzen des Generatorflansches vorgesehen sind.

## Claims

1. A gas bag module comprising a gas generator (16) and a module housing (14),
the gas generator (16) having a generator flange (22) which has formed thereon first hook-shaped fastening elements (24), consisting of sheet metal, for fastening the gas bag module (12) to a steering wheel (10)
and second fastening elements (30; 30'; 30") for fastening the gas generator (16) to the module housing (14), the second fastening elements (30; 30'; 30") being formed on the first fastening elements (24).

2. The gas bag module according to Claim 1, **characterized in that** the first and second fastening elements (24; 30; 30'; 30") are punched out or cut out from sheet metal.

3. The gas bag module according to Claim 1, **characterized in that** the second fastening elements (30') are each formed by a recess (32) in the first fastening elements (24).

4. The gas bag module according to any of the preceding claims, **characterized in that** the second fastening elements (30') are connected with the module housing (14) by a wedge/clamping connection (32, 34).

5. The gas bag module according to either of Claims 1 and 2, **characterized in that** the second fastening elements (30) are configured as sheet metal sections and are connected with the module housing (14) by crimping.

6. The gas bag module according to either of Claims 1 and 2, **characterized in that** the second fastening elements (30") are connected with the module housing (14) by means of at least one retainer clip (36).

7. The gas bag module according to either of Claims 1 and 2, **characterized in that** the second fastening elements are connected with the module housing by a press fit.

8. The gas bag module according to any of the preceding claims, **characterized in that** an inflation opening of a gas bag (18) arranged in the module housing (14) is fastened to the module housing (14) by the generator flange (22).

9. The gas bag module according to any of the preceding claims, **characterized in that** the fastening elements (24, 30, 30', 30") are provided on strip-shaped lateral extensions of the generator flange that are bent over axially towards the base (15) of the module housing.

## Revendications

1. Module de coussin à gaz comportant un générateur de gaz (16) et un boîtier de module (14),
le générateur de gaz (16) présentant une bride de générateur (22) sur laquelle sont réalisés des premiers éléments de fixation (24) en forme de crochets constitués par de la tôle pour fixer le module de coussin à gaz (12) sur un volant de direction (10)
et des deuxièmes éléments de fixation (30 ; 30' ; 30") pour fixer le générateur de gaz (16) sur le boîtier de module (14), les deuxièmes éléments de fixation (30 ; 30' ; 30") étant réalisés sur les premiers éléments de fixation (24).

2. Module de coussin à gaz selon la revendication 1, **caractérisé en ce que** les premiers et deuxièmes éléments de fixation (24 ; 30 ; 30' ; 30") sont estampés ou découpés à partir de la tôle.

3. Module de coussin à gaz selon la revendication 1, **caractérisé en ce que** les deuxièmes éléments de fixation (30') sont formés chacun par un évidement (32) dans les premiers éléments de fixation (24).

4. Module de coussin à gaz selon l'une des revendications précédentes, **caractérisé en ce que** les deuxièmes éléments de fixation (30') sont reliés au boîtier de module (14) par une liaison par calage/serrage (32, 34).

5. Module de coussin à gaz selon l'une des revendications 1 à 2, **caractérisé en ce que** les deuxièmes éléments de fixation (30) sont réalisés sous forme de tronçons de tôle et reliés au boîtier de module (14) par sertissage.

6. Module de coussin à gaz selon l'une des revendications 1 à 2, **caractérisé en ce que** les deuxièmes éléments de fixation (30") sont reliés au boîtier de module (14) par au moins une agrafe de sécurité (36).

7. Module de coussin à gaz selon l'une des revendications 1 à 2, **caractérisé en ce que** les deuxièmes éléments de fixation sont reliés au boîtier de module par un ajustage serré.

8. Module de coussin à gaz selon l'une des revendications précédentes, **caractérisé en ce qu'**un orifice d'insufflation d'un coussin à gaz (18) agencé dans le boîtier de module (14) est fixé sur le boîtier de module (14) par la bride de générateur (22).

9. Module de coussin à gaz selon l'une des revendications précédentes, **caractérisé en ce que** les éléments de fixation (24 ; 30 ; 30' ; 30") sont prévus sur des prolongements latéraux en forme de bandes de la bride de générateur, lesquels sont repliés axialement en direction du fond (15) du boîtier de module.
